# EUROPÄISCHE PATENTSCHRIFT

(11) **EP 2 366 656 B1**
(45) Veröffentlichungstag und Bekanntmachung des Hinweises auf die Patenterteilung: **21.10.2015**
(21) Anmeldenummer: 11151554.0
(22) Anmeldetag: 20.01.2011
(51) Int. Cl.: B67C 3/02, B67C 3/22, B29C 49/42, B67C 3/00

(54) **Vorrichtung und Verfahren zum Steuern einer Abfüllanlage**
Method and device for controlling a filling assembly
Dispositif et procédé destinés à la commande d'une installation de remplissage

(30) Priorität: 19.03.2010 DE 102010003078
(43) Veröffentlichungstag der Anmeldung: 21.09.2011
(73) Patentinhaber: Krones AG, 93073 Neutraubling (DE)
(72) Erfinder: Raith, Stefan, 93102, Pfatter (DE); Lehner, Johann, 93090, Bach (DE); Aufhauser, Michael, 93083, Gebelkofen (DE)
(74) Vertreter: Grünecker Patent- und Rechtsanwälte PartG mbB

(56) Entgegenhaltungen:
- WO-A2-2007/028493
- DE-A1- 2 107 226
- DE-A1- 2 122 152
- DE-A1- 3 823 032
- DE-A1-102008 008 528
- DE-A1-102008 021 527
- DE-B- 1 158 856
- DE-U1-202008 013 072
- JP-A- 2000 127 236

## Beschreibung

Die vorliegende Erfindung betrifft ein Verfahren und eine Vorrichtung zum Steuern einer Abfüllanlage, insbesondere in der Lebensmittel- oder Getränkeindustrie.

In einer Abfüllanlage werden üblicherweise alle Verbraucher trotz längerem Produktionsstillstand, beispielsweise hervorgerufen durch Umrüsten oder Reinigungsarbeiten, weiter betrieben und mit Energie und/oder Verbrauchsmitteln versorgt.

Dadurch soll erreicht werden, dass nach der Produktionsunterbrechung beim weiteren Betrieb alle Funktionen der Abfüllanlage sofort verfügbar sind.

Ein entsprechendes Verfahren gemäß dem Oberbegriff des Anspruchs 1 ist aus der DE 20 2008 013 072 U1 bekannt.

Diese bekannte Vorgehensweise hat jedoch den Nachteil, dass dadurch ein hoher Verbrauch an Energie und/oder an Verbrauchsmitteln entsteht.

Daher ist es Aufgabe der vorliegenden Erfindung, ein Verfahren bereitzustellen, das einen energieeffizienten und/oder verbrauchsmitteleffizienten Betrieb einer Abfüllanlage ermöglicht. Diese Aufgabe wird durch ein Verfahren gemäß Patentanspruch 1 gelöst.

Das erfindungsgemäße Verfahren zum Steuern einer Abfüllanlage umfasst unter anderem die Schritte:
Erfassen eines Betriebszustandes der Abfüllanlage,
Bestimmen, ob für den erfassten Betriebszustand der Energieverbrauch und/oder der Verbrauchsmittelverbrauch wenigstens eines Verbrauchers der Abfüllanlage reduziert werden kann, und
wenn bestimmt wird, dass der Energieverbrauch und/oder der Verbrauchsmittelverbrauch wenigstens eines Verbrauchers reduziert werden kann, Reduzieren des Energieverbrauchs und/oder des Verbrauchsmittelverbrauchs des wenigstens einen Verbrauchers.

Dadurch, dass der Energieverbrauch und/oder der Verbrauchsmittelverbrauch wenigstens eines Verbrauchers der Abfüllanlage in Abhängigkeit von einem erfassten Betriebszustand der Abfüllanlage reduziert wird, kann die Abfüllanlage energieeffizient und/oder verbrauchsmitteleffizient betrieben werden.

Der Energieverbrauch und/oder der Verbrauchsmittelverbrauch eines oder mehrerer Verbraucher der Abfüllanlage können also betriebsablaufbezogen reduziert werden.

Die Abfüllanlage kann Bearbeitungselemente zum Befüllen von Behältern, insbesondere mit einer Flüssigkeit, umfassen. Die Abfüllanlage kann außerdem Behandlungselemente zum Herstellen und/oder Behandeln der Behälter umfassen. Beispielsweise kann die Abfüllanlage eine Blasmaschine zum Herstellen von Kunststoffbehältern, eine Sterilisationseinrichtung, eine Etikettiereinrichtung und/oder eine Verschließeinrichtung zum Verschließen der gefüllten Behälter mit einem Verschluss umfassen. Die Abfüllanlage kann außerdem eine Kommissioniervorrichtung zum Kommissionieren der gefüllten Behälter, beispielsweise zu einer Palette, einen Packer und/oder wenigstens eine Transportvorrichtung zum Fördern und/oder Stauen der Behälter, umfassen.

Der wenigstens eine Verbraucher der Abfüllanlage kann einer Behandlungseinrichtung oder einem Element einer Behandlungseinrichtung der Abfüllanlage entsprechen. Der wenigstens eine Verbraucher der Abfüllanlage kann auch einer Belüftungsvorrichtung, einer Beleuchtungsvorrichtung, einem Klimagerät, insbesondere für Raumluft und/oder für einen oder mehrere Schaltschränke, einem Kompressor zur Drucklufterzeugung, einer Heizeinrichtung, insbesondere für einen Schrumpftunnel an einem Packer oder zur Preformerwärmung in einer Blasmaschine und/oder einer Sterilisationseinrichtung, insbesondere an einem Füller, entsprechen. Verbrauchsmittel können Medien entsprechen, die im Betrieb der Abfüllanlage durch stoffliche Verwertung verbraucht werden. Verbrauchsmittel im Sinne der Anmeldung können insbesondere Druckluft, Heißdampf und Heißwasser, Sterildampf, Sterilisationsmittel, Wasser und/oder Reinigungsmittel umfassen.

Als Energie kann insbesondere elektrische Energie bezeichnet werden.

Das Reduzieren des Energieverbrauchs und/oder des Verbrauchsmittelverbrauchs entspricht entweder einem Abschalten des wenigstens einen Verbrauchers oder das Reduzieren des Energieverbrauchs entspricht einem Versetzen des wenigstens einen Verbrauchers in einen Ruhezustand (Stand-by Zustand).

Alternativ oder zusätzlich kann das Reduzieren des Energieverbrauchs des wenigstens einen Verbrauchers einem Reduzieren der Leistung des wenigstens einen Verbrauchers entsprechen. Dies kann beispielsweise durch ein Verringern der Last des wenigstens einen Verbrauchers geschehen.

Der Energieverbrauch und/oder der Verbrauchsmittelverbrauch des wenigstens einen Verbrauchers kann insbesondere im Falle einer Produktionsunterbrechung reduziert werden. In diesem Fall kann das Erfassen eines Betriebszustandes ein Erfassen einer Produktionsunterbrechung bzw. eines Produktionsstillstandes umfassen oder einem Erfassen einer Produktionsunterbrechung bzw. eines Produktionsstillstandes entsprechen. Der erfasste Betriebszustand kann in diesem Fall einer erfassten Produktionsunterbrechung bzw. einem erfassten Produktionsstillstand entsprechen. Eine Produktionsunterbrechung kann insbesondere durch Umrüsten oder Reinigungsarbeit hervorgerufen werden. Eine Produktionsunterbrechung kann auch betriebsbedingt, beispielsweise an Wochenenden oder außerhalb der vorgesehenen Arbeitszeiten, etwa in der Nacht, auftreten. Zu einer Produktionsunterbrechung kann es auch bei Wartungs- und/oder Instandhaltungsarbeiten und/oder bei Reparaturarbeiten, beispielsweise bei einer Störung, insbesondere durch Ausfall von Bauteilen, kommen.

Das Erfassen eines Betriebszustandes einer Abfüllanlage kann insbesondere ein Erfassen des Betriebszustandes der Verbraucher der Abfüllanlage umfassen. Beispielsweise kann das Erfassen für einen oder mehrere Verbraucher ein Erfassen, ob Artikel, insbesondere Behälter, in den Verbrauchern bearbeitet werden, umfassen.

Beispielsweise kann eine Anlage mehrere Maschinen für eine Aufgabe umfassen, beispielsweise zwei Etikettiereinrichtungen. Das Erfassen eines Betriebszustandes kann in diesem Fall ein Erfassen, ob redundante oder mehrfach vorhandene Maschinen/Komponenten für die Produktion benötigt werden, umfassen.

Das Erfassen eines Betriebszustandes der Abfüllanlage kann ein Erfassen wenigstens eines Betriebsparameters und/oder wenigstens einer Betriebseinstellung eines oder mehrerer, insbesondere aller, Verbraucher der Abfüllanlage umfassen.

Das Erfassen eines Betriebszustandes kann alternativ oder zusätzlich ein Erfassen des Energieverbrauchs wenigstens eines Verbrauchers der Abfüllanlage, insbesondere aller Verbraucher der Abfüllanlage, umfassen.

Alternativ oder zusätzlich kann das Erfassen des Betriebszustandes ein Erfassen einer Eingabe durch eine Bedienperson umfassen. Beispielsweise kann eine Bedienperson über eine Steuerungseinheit einen Betriebszustand, insbesondere zu einer bevorstehenden Produktionsunterbrechung, wählen, wobei das Reduzieren des Energieverbrauchs und/oder des Verbrauchsmittelverbrauchs des wenigstens einen Verbrauchers auf Basis des von der Bedienperson gewählten Betriebszustandes durchgeführt werden.

Der Energieverbrauch und/oder der Verbrauchsmittelverbrauch wird für eine vorherbestimmte Zeit reduziert Die vorherbestimmte Zeit wird in Abhängigkeit von dem erfassten Betriebszustand gewählt. Insbesondere kann im Falle einer Produktionsunterbrechung ein Grund oder eine Ursache für die Produktionsunterbrechung erfasst werden, wobei die vorherbestimmte Zeit basierend auf dem erfassten Grund bestimmt wird.

Das Erfassen eines Grundes für eine Produktionsunterbrechung kann insbesondere auf Basis einer Eingabe durch eine Bedienperson erfolgen. Dadurch, dass ein Grund für eine Produktionsunterbrechung erfasst wird, kann die Zeit, in der der Energieverbrauch und/oder der Verbrauchsmittelverbrauch des wenigstens einen Verbrauchers reduziert wird, optimiert werden. Beispielsweise kann vor Ende der Produktionsunterbrechung, insbesondere nach Ablauf der vorherbestimmten Zeit, der Energieverbrauch und/oder der Verbrauchsmittelverbrauch des wenigstens einen Verbrauchers wieder erhöht werden. Damit kann gewährleistet werden, dass der Verbraucher nach der Produktionsunterbrechung beim weiteren Betrieb sofort verfügbar ist.

Der Energieverbrauch und/oder der Verbrauchsmittelverbrauch des wenigstens einen Verbrauchers kann unabhängig von anderen Verbrauchern der Abfüllanlage reduziert werden. Beispielsweise kann der Energieverbrauch und/oder der Verbrauchsmittelverbrauch des wenigstens einen Verbrauchers reduziert werden, während der Energieverbrauch und/oder der Verbrauchsmittelverbrauch anderer Verbraucher unverändert beibehalten wird. Insbesondere können Verbraucher, welche nach einer Reduktion des Energie - und/oder Verbrauchsmittelverbrauchs eine lange Zeit benötigen würden, um wieder betriebsbereit zu sein, auch im Falle einer Produktionsunterbrechung weiter betrieben werden, insbesondere ohne den Energieverbrauch und/oder den Verbrauchsmittelverbrauch zu reduzieren.

Es kann außerdem wenigstens ein Umgebungsparameter der Abfüllanlage gemessen werden, wobei das Reduzieren des Energieverbrauchs und/oder des Verbrauchsmittelverbrauchs des wenigstens einen Verbrauchers auf dem wenigstens einen gemessenen Umgebungsparameter basieren kann. Dadurch kann der Energieverbrauch und/oder der Verbrauchsmittelverbrauch der Abfüllanlage, insbesondere des Verbrauchers, an Umgebungsparameter angepasst werden. Der wenigstens eine Umgebungsparameter kann beispielsweise einer Temperatur oder einer Luftfeuchtigkeit entsprechen.

Der Energieverbrauch und/oder der Verbrauchsmittelverbrauch des wenigstens einen Verbrauchers kann nach einer vorherbestimmten Zeit wieder erhöht werden. Dadurch kann gewährleistet werden, dass der wenigstens eine Verbraucher nach einer Produktionsunterbrechung im weiteren Betrieb zur Verfügung steht.

Alternativ kann das Erhöhen des Energieverbrauchs und/oder des Verbrauchsmittelverbrauchs des wenigstens einen Verbrauchers auch in Abhängigkeit von einem erfassten Betriebszustand durchgeführt werden. Beispielsweise kann der Energieverbrauch und/oder der Verbrauchsmittelverbrauch des wenigstens einen Verbrauchers reduziert werden, nachdem ein erster Betriebszustand erfasst wurde und nach Erfassen eines zweiten Betriebszustandes wieder erhöht werden. Der erste Betriebszustand kann sich insbesondere vom zweiten Betriebszustand unterscheiden.

Das Bestimmen, ob für den erfassten Betriebszustand der Energieverbrauch und/oder der Verbrauchsmittelverbrauch wenigstens eines Verbrauchers der Abfüllanlage reduziert werden kann, umfasst einen, insbesondere automatischen, Abgleich mit wenigstens einem vorherbestimmten Betriebszustand. Der wenigstens eine vorherbestimmte Betriebszustand ist in einem Speicherelement zusammen mit einer Spezifikation für einen vorherbestimmten, insbesondere optimalen, Energieverbrauch und/oder Verbrauchsmittelverbrauch wenigstens eines Verbrauchers im wenigstens einen vorherbestimmten Betriebszustand gespeichert

Das Erfassen eines Betriebszustandes und das Bestimmen, ob für den erfassten Betriebszustand der Energieverbrauch und/oder der Verbrauchsmittelverbrauch wenigstens eines Verbrauchers der Abfüllanlage reduziert werden kann, können mehrfach, insbesondere wiederholt, durchgeführt werden. Dadurch kann die Abfüllanlage auf mögliche Energiereduktionen und/oder Verbrauchsmittelverbrauchsreduktionen hin überwacht werden. Die beiden Schritte können insbesondere kontinuierlich, zu vorherbestimmten Zeitpunkten oder in vorherbestimmten zeitlichen Abständen durchgeführt werden. Sobald bestimmt wird, dass der Energieverbrauch und/oder der Verbrauchsmittelverbrauch wenigstens eines Verbrauchers der Abfüllanlage reduziert werden kann, kann der Energieverbrauch und/oder der Verbrauchsmittelverbrauch des wenigstens einen Verbrauchers reduziert werden.

Einer oder mehrere Schritte des Verfahrens können teilweise oder vollständig automatisch durchgeführt werden, beispielsweise durch ein Steuerungselement der Abfüllanlage. Insbesondere können alle Schritte des Verfahrens teilweise oder vollständig automatisch durchgeführt werden.

Die Erfindung stellt außerdem eine Abfüllanlage gemäß Anspruch 9 bereit, umfassend wenigstens einen Verbraucher und ein Steuerungselement, das ausgebildet und/oder konfiguriert ist, um unter anderem einen Betriebszustand der Abfüllanlage zu erfassen, zu bestimmen, ob für den erfassten Betriebszustand der Energieverbrauch und/oder der Verbrauchsmittelverbrauch wenigstens eines Verbrauchers der Abfüllanlage reduziert werden kann und, wenn bestimmt wird, dass der Energieverbrauch und/oder der Verbrauchsmittelverbrauch des wenigstens einen Verbrauchers reduziert werden kann, den Energieverbrauch und/oder den Verbrauchsmittelverbrauch des wenigstens einen Verbrauchers zu reduzieren.

Eine derartige Abfüllanlage kann energieeffizient und/oder verbrauchsmitteleffizient betrieben werden.

Das Steuerungselement kann insbesondere derart ausgebildet und/oder konfiguriert sein, um ein oben beschriebenes Verfahren zum Steuern einer Abfüllanlage durchzuführen.

Das Steuerungselement kann ein Produktionsleitsystem (Manufacturing Execution System, MES) sein.

Die Abfüllanlage kann insbesondere eine Blasmaschine, einen Füller, eine Etikettiervorrichtung, einen Verschließer, einen Packer, eine Reinigungsmaschine, einen Pasteur, wenigstens eine Transportvorrichtung und/oder eine Kommissioniervorrichtung umfassen.

Die Abfüllanlage, insbesondere der wenigstens eine Verbraucher der Abfüllanlage, kann derart ausgebildet sein, dass der Energieverbrauch und/oder der Verbrauchsmittelverbrauch des wenigstens einen Verbrauchers unabhängig von anderen Verbrauchern der Abfüllanlage reduziert werden kann.

Weitere Merkmale und Vorteile der Erfindung werden nachfolgend anhand der beispielhaften Figuren erläutert. Dabei zeigt
- Figur 1: eine Illustration einer beispielhaften Abfüllanlage; und
- Figur 2: eine Illustration eines beispielhaften Verfahrens zum Steuern einer Abfüllanlage in Form eines Flussdiagramms.

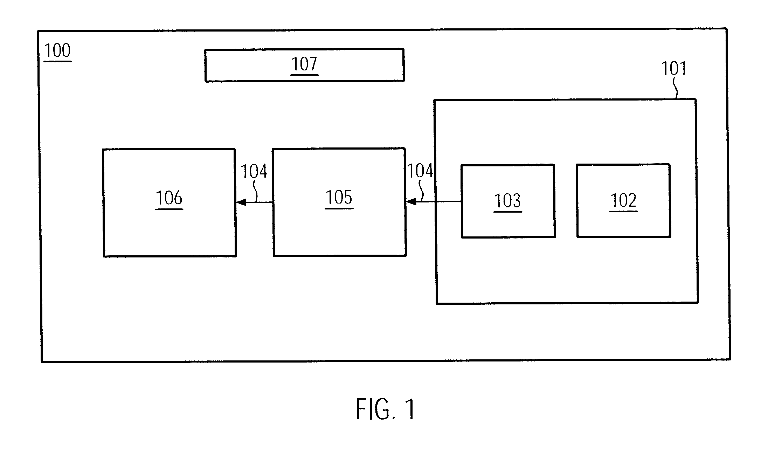

Figur 1 zeigt eine beispielhafte Abfüllanlage 100 umfassend mehrere Verbraucher. Beispielsweise umfasst die beispielhafte Abfüllanlage 100 eine Blasmaschine 101, die wiederum ein Heizelement 102 zum Vorheizen der Vorformlinge (Preforms) und ein Blasrad 103 zum Formblasen der erhitzten Vorformlinge umfasst.

Die beispielhafte Abfüllanlage umfasst außerdem einen Füller 105 und eine Etikettiervorrichtung 106. Zwischen den einzelnen Maschinen der Abfüllanlage 100 werden die Artikel durch Transportvorrichtungen 104 gefördert und/oder gestaut.

Neben den Maschinen zum Behandeln der Artikel, insbesondere Flaschen, umfasst die beispielhafte Abfüllanlage 100 außerdem ein Subsystem 107. Bei dem Subsystem 107 kann es sich beispielsweise um ein Beleuchtungssystem, ein Klimagerät, einen Kompressor zur Drucklufterzeugung, eine Heizeinrichtung und/oder ein Belüftungssystem handeln.

Außer den in Figur 1 beispielhaft gezeigten Verbrauchern kann die Abfüllanlage 100 alternativ oder zusätzlich eine Sterilisationsvorrichtung zum Sterilisieren der erzeugten Artikel, einen Rinser, einen Verschließer, einen Packer und/oder eine Kommissioniervorrichtung umfassen.

Die Verbraucher können im Betrieb Energie, insbesondere elektrische Energie, und/oder Verbrauchsmittel, beispielsweise Wasser oder Reinigungsmittel, verbrauchen. Wasser wird beispielsweise in einer Flaschenreinigungsmaschine im Bereich der Frischwasserspritzung oder in einem Pasteur zur Kühlung der Flaschen gegen Überpasteurisierung, verbraucht.

Die beispielhafte Abfüllanlage 100 umfasst außerdem ein Steuerungselement, das derart ausgebildet und/oder konfiguriert ist, dass es den Energieverbrauch und/oder den Verbrauchsmittelverbrauch wenigstens eines Verbrauchers der Abfüllanlage 100 in Abhängigkeit von einem erfassten Betriebszustand steuern, insbesondere reduzieren, kann.

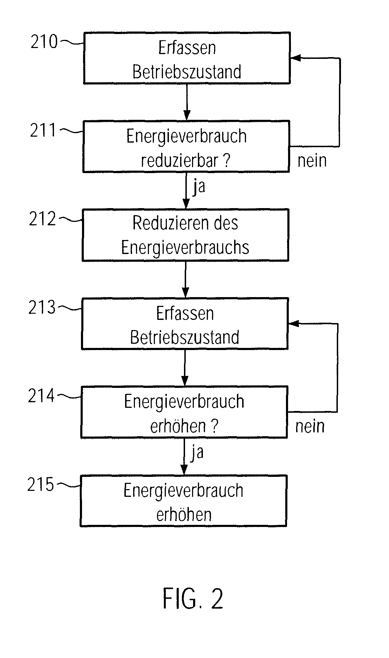

Insbesondere kann das Steuerungselement ein Verfahren zum Steuern einer Abfüllanlage wie in Figur 2 illustriert durchführen.

Insbesondere zeigt Figur 2 ein beispielhaftes Verfahren zum Steuern einer Abfüllanlage in Form eines Flussdiagramms. In einem ersten Schritt 210 wird ein Betriebszustand der Abfüllanlage erfasst. Das Erfassen eines Betriebszustandes der Abfüllanlage kann dabei ein Erfassen von Betriebsparametern und/oder Betriebseinstellungen eines oder mehrerer, insbesondere aller, Verbraucher der Abfüllanlage umfassen. Alternativ oder zusätzlich kann das Erfassen des Betriebszustandes ein Erfassen einer Eingabe durch eine Bedienperson umfassen.

Das Erfassen eines Betriebszustandes umfasst auch ein Erfassen des Energieverbrauchs und/oder des Verbrauchsmittelverbrauchs wenigstens eines Verbrauchers der Abfüllanlage, insbesondere aller Verbraucher der Abfüllanlage. Das Erfassen eines Betriebszustandes kann insbesondere ein Erfassen einer Produktionsunterbrechung umfassen.

In einem zweiten Schritt 211 wird bestimmt, ob für den erfassten Betriebszustand der Energieverbrauch und/oder der Verbrauchsmittelverbrauch wenigstens eines Verbrauchers der Abfüllanlage reduziert werden kann. Hierzu können, beispielsweise in einem Speicherelement des Steuerungselements der Abfüllanlage, ein oder mehrere vorherbestimmte Betriebszustände abgespeichert werden. Im Zusammenhang mit einem oder mehreren, insbesondere jedem, der vorherbestimmten Betriebszustände kann eine Spezifikation eines vorherbestimmten, insbesondere optimalen, insbesondere minimalen, Energieverbrauchs und/oder Verbrauchsmittelverbrauchs eines oder mehrerer Verbraucher der Abfüllanlage für den vorherbestimmten Betriebszustand gespeichert sein.

Schritt 211 kann in diesem Fall ein Vergleichen des erfassten Betriebszustandes mit den vorherbestimmten Betriebszuständen umfassen. Wenn der erfasste Betriebszustand einem vorherbestimmten Betriebszustand entspricht, kann der Energieverbrauch und/oder der Verbrauchsmittelverbrauch wenigstens eines Verbrauchers mit dem spezifizierten Energieverbrauch und/oder der Verbrauchsmittelverbrauch des wenigstens einen Verbrauchers für den vorherbestimmten Betriebszustand verglichen werden. Wenn der spezifizierte Energieverbrauch und/oder Verbrauchsmittelverbrauch geringer ist als der Energieverbrauch und/oder der Verbrauchsmittelverbrauch des wenigstens einen Verbrauchers im erfassten Betriebszustand, kann der Energieverbrauch und/oder der Verbrauchsmittelverbrauch des wenigstens einen Verbrauchers reduziert werden.

Schritt 211 kann auch ein Bestimmen, ob redundante oder mehrfach vorhandene Verbraucher für den erfassten Betriebszustand gleichzeitig benötigt werden umfassen. Wenn einer oder mehrere der redundanten Verbraucher für den erfassten Betriebszustand nicht benötigt werden, kann der Energieverbrauch und/oder der Verbrauchsmittelverbrauch des einen oder der mehreren redundanten Verbraucher reduziert werden.

Beispielsweise kann eine Abfüllanlage zwei Etikettiereinrichtungen umfassen. Wenn nur eine Etikettiereinrichtung verwendet wird, beispielsweise weil die Leistung einer Etikettiereinrichtung für die zu erzeugenden Flaschen ausreicht, kann der Energieverbrauch und/oder der Verbrauchsmittelverbrauch der zweiten Etikettiereinrichtung reduziert werden.

Wenn bestimmt wird, dass für keinen Verbraucher der Abfüllanlage der Energieverbrauch reduziert werden kann, kehrt das Verfahren zu Schritt 210 zurück und erfasst erneut einen Betriebszustand der Abfüllanlage.

Wenn bestimmt wird, dass der Energieverbrauch und/oder der Verbrauchsmittelverbrauch wenigstens eines Verbrauchers reduziert werden kann, wird Schritt 212 durchgeführt. In Schritt 212 wird der Energieverbrauch und/oder der Verbrauchsmittelverbrauch des wenigstens einen Verbrauchers reduziert, insbesondere auf den spezifizierten vorherbestimmten Energieverbrauch und/oder der Verbrauchsmittelverbrauch für den vorherbestimmten Betriebszustand.

Schritt 212 kann auch ein Abschalten des wenigstens einen Verbrauchers umfassen.

Nach einer Produktionsunterbrechung durch Umrüsten oder Reinigungsarbeiten sollen die Verbraucher der Abfüllanlage für den weiteren Betrieb verfügbar sein. Deshalb wird in Schritt 213 des beispielhaften Verfahrens in Figur 2 erneut ein Betriebszustand der Abfüllanlage erfasst. Insbesondere kann Schritt 213 analog zu Schritt 210 durchgeführt werden. Insbesondere kann das Erfassen eines Betriebszustandes in Schritt 213 ein Erfassen eines Endes einer Produktionsunterbrechung umfassen.

In Schritt 214 wird bestimmt, ob für den erfassten Betriebszustand der Energieverbrauch und/oder der Verbrauchsmittelverbrauch wenigstens eines Verbrauchers erhöht werden muss. Wenn nein, kehrt das Verfahren zu Schritt 213 zurück. Wenn ja, wird in Schritt 215 der Energieverbrauch und/oder der Verbrauchsmittelverbrauch des wenigstens einen Verbrauchers erhöht.

Beispielsweise kann ein erster Betriebszustand erfasst werden, wobei keine Vorformlinge in eine Blasmaschine eingebracht werden. Daraufhin kann der Energieverbrauch und/oder der Verbrauchsmittelverbrauch eines Füllers, eines Blasrades, einer Etikettiervorrichtung, eines Verschließers, eines Packers und/oder einer Kommissioniervorrichtung der Abfüllanlage oder einzelner Elemente davon reduziert werden. Der Energieverbrauch eines Heizelements der Blasmaschine kann beispielsweise unverändert belassen werden, da dieses eine lange Anlaufzeit bei Betriebsbeginn aufweist. Wenn ein zweiter Betriebszustand erfasst wird, in dem wieder Vorformlinge in die Blasmaschine eingebracht werden, kann der Energieverbrauch und/oder der Verbrauchsmittelverbrauch des Füllers, des Blasrades, der Etikettiervorrichtung, des Verschlie-βers, des Packers und/oder der Kommissioniervorrichtung der Abfüllanlage oder einzelner Elemente davon wieder erhöht werden.

In Schritt 214 kann auch bestimmt werden, ob erneut der Energieverbrauch und/oder der Verbrauchsmittelverbrauch wenigstens eines Verbrauchers der Abfüllanlage reduzierbar ist. Wenn ja kann das Verfahren zu Schritt 212 zurückkehren und den Energieverbrauch und/oder den Verbrauchsmittelverbrauch wenigstens eines Verbrauchers reduzieren.

Nach Schritt 215 kann das Verfahren zu Schritt 210 zurückkehren und den Betriebszustand der Abfüllanlage weiter überwachen.

Anstelle einer gesamten Behandlungseinheit der Abfüllanlage kann der wenigstens eine Verbraucher auch einem Element einer Behandlungseinheit entsprechen, beispielsweise einem Lüfter einer Behandlungseinheit. Der Lüfter im Schaltschrank einer Behandlungseinheit kann nach einem Hauptschalter separat verkabelt sein, beispielsweise mit einem Relais, und kann separat abgeschaltet werden. Das Abschalten kann manuell, automatisch über ein Produktionsleitsystem (Manufacturing Execution System, MES) oder über WLAN durchgeführt werden.

Das Erfassen eines Betriebszustandes kann auch ein Empfangen eines Auftrags des Produktionsleitsystems umfassen. Beispielsweise kann das MES einen Umrüstauftrag an die Abfüllanlage abgeben. Daraufhin kann wenigstens ein Verbraucher für die Dauer des Umrüstens gezielt abgeschaltet werden.

Das Erfassen eines Betriebszustandes kann auch ein Messen einer Temperatur und/oder Luftfeuchtigkeit umfassen. Das Reduzieren des Energieverbrauchs und/oder des Verbrauchsmittelverbrauchs wenigstens eines Verbrauchers kann in Abhängigkeit von der gemessenen Temperatur und/oder Luftfeuchtigkeit durchgeführt werden. Beispielsweise kann die Leistung einer Klimaanlage abhängig von der gemessenen Umgebungstemperatur geregelt, insbesondere reduziert, werden. Die Leistung eines Trockners, beispielsweise vor einer Etikettiereinrichtung, kann abhängig von der gemessenen Umgebungstemperatur und/oder -luftfeuchtigkeit geregelt, insbesondere reduziert, werden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Verfahren zum Steuern einer Abfüllanlage (100), umfassend die Schritte:
Erfassen eines Betriebszustandes der Abfüllanlage (100);
Bestimmen ob für den erfassten Betriebszustand der Energieverbrauch und/oder der Verbrauchsmittelverbrauch wenigstens eines Verbrauchers der Abfüllanlage (100) reduziert werden kann; und
wenn bestimmt wird, dass der Energieverbrauch und/oder der Verbrauchsmittelverbrauch wenigstens eines Verbrauchers reduziert werden kann:
Reduzieren des Energieverbrauchs und/oder des Verbrauchsmittelverbrauchs des wenigstens einen Verbrauchers, indem der wenigstens eine Verbraucher abgeschaltet oder in einen Ruhezustand versetzt wird;
wobei das Bestimmen ob für den erfassten Betriebszustand der Energieverbrauch und/oder der Verbrauchsmittelverbrauch wenigstens eines Verbrauchers der Abfüllanlage (100) reduziert werden kann, einen automatischen Abgleich mit wenigstens einem vorherbestimmten Betriebszustand umfasst, der in einem Speicherelement zusammen mit einer Spezifikation für einen optimalen Energieverbrauch und/oder Verbrauchsmittelverbrauch wenigstens eines Verbrauchers im wenigstens einen vorherbestimmten Betriebszustand gespeichert ist;
dadurch gekannzeichnet, dass
der Energieverbrauch und/oder der Verbrauchsmittelverbrauch für eine vorherbestimmte Zeit reduziert wird; und
wobei die vorherbestimmte Zeit in Abhängigkeit von dem erfassten Betriebszustand gewählt wird.

2. Verfahren nach Anspruch 1, wobei der Energieverbrauch und/oder der Verbrauchsmittelverbrauch des wenigstens einen Verbrauchers im Falle einer Produktionsunterbrechung reduziert wird.

3. Verfahren nach Anspruch 1 oder 2, wobei das Erfassen des Betriebszustandes ein Erfassen einer Eingabe durch eine Bedienperson umfasst.

4. Verfahren nach Anspruch 1, wobei im Falle einer Produktionsunterbrechung ein Grund für die Produktionsunterbrechung erfasst wird, und wobei die vorherbestimmte Zeit basierend auf dem erfassten Grund bestimmt wird.

5. Verfahren nach einem der vorangegangenen Ansprüche, wobei der Energieverbrauch und/oder der Verbrauchsmittelverbrauch des wenigstens einen Verbrauchers unabhängig von anderen Verbrauchern der Abfüllanlage (100) reduziert wird.

6. Verfahren nach einem der vorangegangenen Ansprüche, wobei der wenigstens eine Verbraucher im Falle einer Produktionsunterbrechung abgeschaltet wird.

7. Verfahren nach einem der vorangegangenen Ansprüche, wobei wenigstens ein Umgebungsparameter der Abfüllanlage gemessen wird, und wobei das Reduzieren des Energieverbrauchs und/oder der Verbrauchsmittelverbrauch des wenigstens einen Verbrauchers auf dem wenigstens einen gemessenen Umgebungsparameter basiert.

8. Verfahren nach einem der vorangegangenen Ansprüche, wobei der Energieverbrauch und/oder der Verbrauchsmittelverbrauch des wenigstens einen Verbrauchers nach einer vorherbestimmten Zeit wieder erhöht wird.

9. Abfüllanlage (100) umfassend:
wenigstens einen Verbraucher; und
ein Steuerungselement (108), das ausgebildet und/oder konfiguriert ist, um
einen Betriebszustand der Abfüllanlage (100) zu erfassen;
zu bestimmen, ob für den erfassten Betriebszustand der Energieverbrauch und/oder der Verbrauchsmittelverbrauch des wenigstens einen Verbrauchers der Abfüllanlage (100) reduziert werden kann; und
wenn bestimmt wird, dass der Energieverbrauch und/oder der Verbrauchsmittelverbrauch des wenigstens einen Verbrauchers reduziert werden kann:
den Energieverbrauch und/oder den Verbrauchsmittelverbrauch des wenigstens einen Verbrauchers zu reduzieren, indem der wenigstens eine Verbraucher abgeschaltet oder in einen Ruhezustand versetzt wird;
wobei das Bestimmen ob für den erfassten Betriebszustand der Energieverbrauch und/oder der Verbrauchsmittelverbrauch wenigstens eines Verbrauchers der Abfüllanlage (100) reduziert werden kann, einen automatischen Abgleich mit wenigstens einem vorherbestimmten Betriebszustand umfasst, der in einem Speicherelement zusammen mit einer Spezifikation für einen optimalen Energieverbrauch und/oder Verbrauchsmittelverbrauch wenigstens eines Verbrauchers im wenigstens einen vorherbestimmten Betriebszustand gespeichert ist;
wobei der Energieverbrauch und/oder der Verbrauchsmittelverbrauch für eine vorherbestimmte Zeit reduziert wird; und
wobei die vorherbestimmte Zeit in Abhängigkeit von dem erfassten Betriebszustand gewählt wird.

## Claims

1. Method of controlling a bottling plant (100), comprising the steps of:
detecting an operating state of the bottling plant (100);
determining whether for the detected operating state the energy consumption and/or the consumable consumption of at least one consumer of the bottling plant (100) can be reduced; and
if it is determined that the energy consumption and/or the consumable consumption of at least one consumer can be reduced:
reducing the energy consumption and/or the consumable consumption of the at least one consumer by switching off the at least one consumer or by putting the at least one consumer in a stand-by state;
wherein determining whether for the detected operating state the energy consumption and/or the consumable consumption of at least one consumer of the bottling plant (100) can be reduced comprises an automatic matching with at least one predetermined operating state stored in a storage element together with a specification for an optimal energy consumption and/or consumable consumption of at least one consumer in the at least one predetermined operating state;
**characterized in that**
reducing the energy consumption and/or the consumable consumption is for a predetermined period; and
wherein the predetermined period is selected depending on the detected operating state.

2. Method according to claim 1, wherein the energy consumption and/or the consumable consumption of the at least one consumer is reduced in case of a production interruption.

3. Method according to claim 1 or 2, wherein detecting the operating state comprises detecting an input by an operator.

4. Method according to claim 1, wherein in case of a production interruption, a reason for the production interruption is detected, and wherein the predetermined period is determined based on the detected reason.

5. Method according to one of the preceding claims, wherein the energy consumption and/or the consumable consumption of the at least one consumer is reduced independent of other consumers of the bottling plant (100).

6. Method according to one of the preceding claims, wherein the at least one consumer is switched off in case of a production interruption.

7. Method according to one of the preceding claims, wherein at least one ambient parameter of the bottling plant is measured, and wherein the reduction of the energy consumption and/or the consumable consumption of the at least one consumer is based on the at least one measured ambient parameter.

8. Method according to one of the preceding claims, wherein the energy consumption and/or the consumable consumption of the at least one consumer is increased again after a predetermined time.

9. Bottling plant (100), comprising:
at least one consumer; and
a control element (108), which is designed and/or configured to:
detect an operating state of the bottling plant (100);
determine whether for the detected operating state the energy consumption and/or the consumable consumption of the at least one consumer of the bottling plant (100) can be reduced; and
if it is determined that the energy consumption and/or the consumable consumption of the at least one consumer can be reduced:
to reduce the energy consumption and/or the consumable consumption of the at least one consumer by switching off the at least one consumer or by putting the at least one consumer in a stand-by state;
wherein determining whether for the detected operating state the energy consumption and/or the consumable consumption of at least one consumer of the bottling plant (100) can be reduced comprises an automatic matching with at least one predetermined operating state stored in a storage element together with a specification for an optimal energy consumption and/or consumable consumption of the at least one consumer in the at least one predetermined operating state;
wherein the energy consumption and/or the consumable consumption is reduced for a predetermined period; and
wherein the predetermined period is selected depending on the detected operating state.

## Revendications

1. Procédé pour commander une installation de remplissage (100), comprenant les étapes consistant à :
relever un état de fonctionnement de l'installation de remplissage (100) ;
déterminer si pour l'état de fonctionnement relevé, il est possible de réduire la consommation d'énergie et/ou la consommation de consommables d'au moins un élément consommateur ou dissipateur de l'installation de remplissage (100) ; et
lorsqu'il a été déterminé que la consommation d'énergie et/ou la consommation de consommables d'au moins un élément consommateur ou dissipateur pouvaient être réduites :
réduire la consommation d'énergie et/ou la consommation de consommables du dit au moins un élément consommateur ou dissipateur, en arrêtant ledit au moins un élément consommateur ou dissipateur ou en le mettant dans un état de repos ;
la détermination de la possibilité de réduction de la consommation d'énergie et/ou de la consommation de consommables d'au moins un élément consommateur ou dissipateur de l'installation de remplissage (100), pour l'état de fonctionnement relevé, comprenant une comparaison automatique avec au moins un état de fonctionnement déterminé auparavant, qui est mémorisé dans un élément de mémoire en commun avec une spécification pour une consommation d'énergie optimale et/ou une consommation de consommables optimale d'au moins un élément consommateur ou dissipateur dans ledit au moins un état de fonctionnement déterminé auparavant ;
**caractérisé en ce que**
la consommation d'énergie et/ou la consommation de consommables sont réduites pour un temps prédéterminé ; et
le temps prédéterminé est choisi en fonction de l'état de fonctionnement relevé.

2. Procédé selon la revendication 1, d'après lequel on réduit la consommation d'énergie et/ou la consommation de consommables dudit au moins un élément consommateur ou dissipateur, dans le cas d'une interruption de la production.

3. Procédé selon la revendication 1 ou la revendication 2, d'après lequel le relevé de l'état de fonctionnement comprend le relevé d'une saisie par une personne de service.

4. Procédé selon la revendication 1, d'après lequel dans le cas d'une interruption de production, on relève une raison de cette interruption de production, et d'après lequel le temps prédéterminé est basé sur ladite raison relevée.

5. Procédé selon l'une des revendications précédentes, d'après lequel on réduit la consommation d'énergie et/ou la consommation de consommables dudit au moins un élément consommateur ou dissipateur, indépendamment d'autres éléments consommateurs ou dissipateurs de l'installation de remplissage (100).

6. Procédé selon l'une des revendications précédentes, d'après lequel dans le cas d'une interruption de production, on arrête ledit au moins un élément consommateur ou dissipateur.

7. Procédé selon l'une des revendications précédentes, d'après lequel on mesure au moins un paramètre d'environnement de l'installation de remplissage, et d'après lequel la réduction de la consommation d'énergie et/ou la consommation de consommables dudit au moins un élément consommateur ou dissipateur est basée sur ledit au moins un paramètre d'environnement mesuré.

8. Procédé selon l'une des revendications précédentes, d'après lequel on augmente à nouveau la consommation d'énergie et/ou la consommation de consommables après un temps prédéterminé.

9. Installation de remplissage (100) comprenant :
au moins un élément consommateur ou dissipateur ; et un élément de commande (108) qui est conçu et/ou configuré pour
relever un état de fonctionnement de l'installation de remplissage (100) ;
déterminer si pour l'état de fonctionnement relevé, il est possible de réduire la consommation d'énergie et/ou la consommation de consommables dudit au moins un élément consommateur ou dissipateur de l'installation de remplissage (100) ; et
lorsqu'il a été déterminé que la consommation d'énergie et/ou la consommation de consommables d'au moins un élément consommateur ou dissipateur pouvaient être réduites :
réduire la consommation d'énergie et/ou la consommation de consommables du dit au moins un élément consommateur ou dissipateur, en arrêtant ledit au moins un élément consommateur ou dissipateur ou en le mettant dans un état de repos ;
la détermination de la possibilité de réduction de la consommation d'énergie et/ou de la consommation de consommables d'au moins un élément consommateur ou dissipateur de l'installation de remplissage (100), pour l'état de fonctionnement relevé, comprenant une comparaison automatique avec au moins un état de fonctionnement déterminé auparavant, qui est mémorisé dans un élément de mémoire en commun avec une spécification pour une consommation d'énergie optimale et/ou une consommation de consommables optimale d'au moins un élément consommateur ou dissipateur dans ledit au moins un état de fonctionnement déterminé auparavant ;
la consommation d'énergie et/ou la consommation de consommables étant réduites pour un temps prédéterminé ; et
le temps prédéterminé étant choisi en fonction de l'état de fonctionnement relevé.
